# EUROPEAN PATENT SPECIFICATION

(11) **EP 3 731 948 B1**
(45) Date of publication and mention of the grant of the patent: **06.05.2026**
(21) Application number: 18834052.5
(22) Date of filing: 20.12.2018
(51) Int. Cl.: B01D 24/00, B01D 24/16, B01D 24/36

(54) **FILTER FOR BEVERAGE DISPENSING MACHINES**
FILTER FÜR GETRÄNKEAUSGABEMASCHINEN
FILTRE POUR MACHINES DE DISTRIBUTION DE BOISSONS

(30) Priority: 29.12.2017 IT 201700151002
(43) Date of publication of application: 04.11.2020
(73) Proprietor: W.F. S.R.L., 42122 Reggio Emilia (IT)
(72) Inventor: BEDOCCHI, Gianluca, 42020 Reggio Emilia (IT)
(74) Representative: Cossu, Alessandro
(86) International application number: PCT/IB2018/060419
(87) International publication number: WO 2019/130178

(56) References cited:
- FR-A- 651 511
- US-A- 4 457 849
- US-A1- 2016 200 612
- US-A1- 2016 339 371
- US-B1- 6 533 931
- W.F. VENDING DIVISION: "INFINITY COFFEE with LIMONA FILTER", 21 December 2016 (2016-12-21), XP055502648, Retrieved from the Internet <URL:http://vending.water-filters.it/wp-content/uploads/2017/01/Limona_EN.pdf> [retrieved on 20180828]

## Description

### Technical field

The invention relates to a filter operating on a liquid, preferably water, in particular water which is used for making beverages.

More specifically, these beverages are in the form of hot or cold beverages, and the water is especially used in machines for dispensing respective beverages, for example in the form of respective beverage vending machines.

### Background art

Known in the prior art are filters operating on water which are used for making beverages, in respective machines for dispensing respective beverages, the filters comprising respective containment means which comprise a respective body defining a chamber for housing corresponding media for filtering the liquid, means defining an inlet for the liquid into the containment means, and means defining an outlet of the liquid from the containment means.

Patent documents US 2016/339371, US 6 533 931, US 2016/200612, US 4 457 849 and FR 651 511 illustrate corresponding filter solutions having a body which defines a containment chamber equipped with an inlet for the liquid and an outlet for the filtered liquid.

These solutions comprise generic individual filtering means which are able to filter, only partly, all the impurities present in the water.

In addition, there is the fact that any media present is not kept floating correctly with the risk of clogging of the filter or, even, with potential escape of the media together with the liquid potentially not filtered correctly.

Moreover, the attachment systems are often positioned in zones opposite the filter body, thus creating problems for correct attachment of the filter between the zone for supplying water and the machine on which the filter is installed.

As stated, therefore, one problem noted in relation to the prior art filters relates to the risk that the operator, responsible for the installation of these filters in the relative machines, positions the filter incorrectly, with the filtering media not being able to operate in an adequate manner and which would therefore release water which is not purified.

Another problem noted in relation to the prior art filters relates to their excessive size, which makes their installation difficult in their respective dispensing machines.

However, the need is felt in the sector to provide a filter which operates in a particularly effective manner.

Moreover, the need is felt in the sector to provide a filter which is fixed in a particularly stable manner.

Moreover, the need is felt in the sector to provide a filter which is particularly simple and easy to set up.

### Disclosure of the invention

The invention proposes a new and/or alternative solution to the solutions known up to now and, more specifically, proposes to overcome one or more of the above mentioned drawbacks or problems and/or to meet one or more of the needs felt in the trade or inferable from the above.

### Brief description of the drawings

The innovative aspects of the invention, or specific advantageous features, are set out in the appended claims and its technical features and advantages are apparent from the detailed description which follows of a preferred, advantageous embodiment of it, which must be considered purely as a non-limiting example, the description being made with reference to the accompanying drawings, in which:

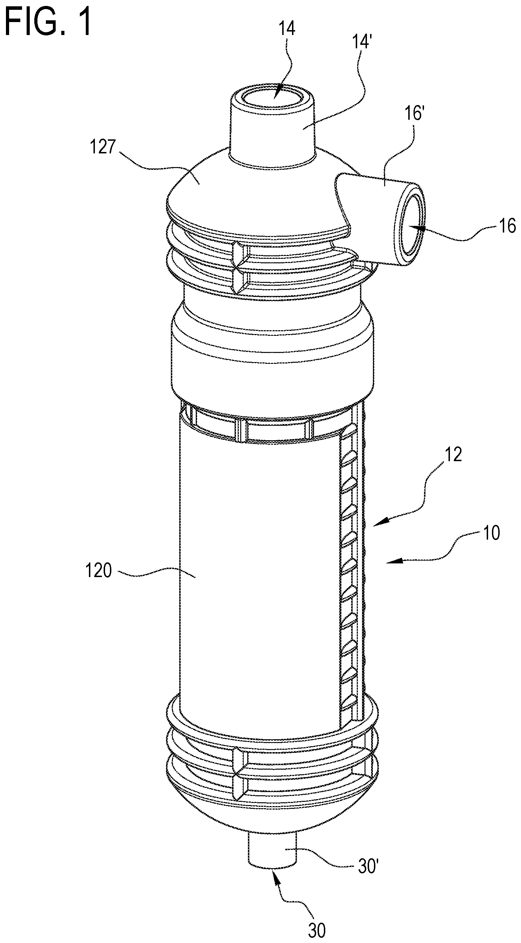

- Figure 1 is a perspective schematic view of a preferred embodiment of the filter according to the invention;
- Figure 2 is a perspective schematic view sectioned longitudinally of the preferred embodiment of the filter according to the invention;
- Figure 3 is a perspective schematic exploded view of the preferred embodiment of the filter according to the invention;
- Figure 4 is a schematic perspective view in cross section of an enlarged detail of Figure 2 of the preferred embodiment of the filter according to the invention;
- Figure 5 is a schematic perspective view in cross section of an enlarged detail of Figure 2 of the preferred embodiment of the filter according to the invention;

### Detailed description of preferred embodiments of the invention

The accompanying drawings illustrate a preferred embodiment of a filter 10 operating on a liquid, preferably water, in particular water which is used for making beverages, in particular in the form of hot or cold beverages, and especially which can be used in machines for dispensing beverages, for example in the form of respective beverage vending machines.

As illustrated, the filter 10 comprises containment means 12 formed by a body 120 defining a chamber 13 for housing media 15 for filtering the liquid, which is made to flow into the chamber 13.

The body 120 (cylindrical in shape) has a longitudinal axis of extension to define a first and second end of the chamber 13.

The filter 10 also comprises means 14 for the inlet of the liquid in the containment means 12 (the body 120).

The input means 14 of the liquid extend along the longitudinal axis of extension of the body 120 (basically, they are coaxial to the longitudinal axis of extension).

The filter 10 also comprises means 16 defining an outlet of the liquid from the containment means 12.

The means 16 for the outlet of the liquid extends transversely to the axis of longitudinal extension of the body 120 (in short, it is transversal to the input means 14).

The means 14 for the inlet of the liquid and the means 16 for the outlet of the liquid from the containment means 12 are both situated at the same first end of the chamber 13.

Again as illustrated, the filter 10 comprises first filtering means 20 arranged inside the body 120 and at the second end of the chamber 13, opposite the first end, and configured for filtering the incoming fluid.

The filter 10 comprises second filtering means 22 and third filtering means 24 located one after the other along the axis of extension of the body 120 and configured for filtering further and in succession, relative to a direction of flow of the liquid (towards the outlet), the fluid before its outlet.

The second 22 and the third 24 filtering means are stably housed at the first end of the chamber 13 composed of a cap 127 which can be associated with and removable from the remaining part of the body 120.

Again as illustrated, between the first 20 and the second 22 filtering means are positioned the filtering media 15 housed in an intermediate zone 13' of the housing chamber 13 defined by the body 120.

In other words, the filter 10 comprises four different filtration stages along the passage which the liquid must perform between the inlet and the outlet.

Two of these filtering elements are positioned on the cap which also has, as described, the inlet and outlet means of the liquid.

In practice, as may be inferred from the drawings, the means 14 for the inlet of the liquid in the containment means 12 comprise a nozzle 14 from the inner surface of a respective short end opening 14' of the filter (made on the cap 127) and coaxial with the axis of extension of the body 120.

Preferably, the means for the outlet of the liquid from the containment means 12 comprise a nozzle 16 provided at the peripheral lateral surface of the filter 10 (that is, on the peripheral surface of the cap 127).

Preferably the nozzle 16 is formed by a short opening 16'.

The two openings 14', 16' are advantageously shaped for the attachment to respective pipes or conduits, in particular of the respective machine in which the filter is installed.

The filter 10 comprises means 18 which convey the liquid to the second end of the chamber 13 for housing the media 15 which is opposite the first end in which are made the means 14 for the inlet of the liquid.

The conveying means 18 are housed in the filtration chamber 13, that is, inside the body 120. In this way, a filter is obtained with particularly reduced dimensions, in particular which can be easily used in beverage dispensing or distributing machines.

Preferably, the means for conveying the liquid to the end of the chamber 13 for housing the media 15 comprise a conduit 18, in particular in the form of a tube, preferably made of flexible material, in particular plastic material, which is connected at a respective end to the means 14 for the inlet of liquid and which releases the liquid inside the housing chamber 13 at the second end of the chamber 13.

Advantageously, as may be inferred from the drawings, the body defining the chamber 13 for housing the corresponding media 15 for filtering the liquid is in the form of a hollow body defined by a peripheral wall 120, in particular cylindrical in shape.

Advantageously, as may be inferred from the drawings, the means 18 for conveying the liquid, or longitudinal conduit, are positioned inside, in particular positioned coaxially inside the body 120 defining the housing chamber 13.

Preferably, as may be inferred from the drawings, the first means 20 for filtering the liquid flowing into the housing chamber 13 are supported by means 18 for conveying the liquid into the housing chamber 13, in particular at the respective end opposite to that in which there are the liquid inlet means 14.

Advantageously, as may be inferred from the drawings, the first means for filtering the liquid flowing into the housing chamber 13 comprise a disc-shaped element 20, preferably made of plastic material, which has a plurality of perpendicular through holes 201 for the liquid.

Advantageously, as may be inferred from the drawings, the first means 20 for filtering the inlet liquid are provided at the free end of the conduit 18 for conveying the liquid in the housing chamber 13.

Advantageously, as may be inferred from the drawings, the disc-shaped filtering element 20 has an inside surface 202 for circumferentially engaging the outside surface of the liquid conveying conduit 18, in particular defined by the inside surface of a sleeve 203 which protrudes perpendicularly from the disc-shaped body of the disc-shaped element 20 and which is preferably engaged with the end of the conduit 18 for conveying the liquid.

As may be inferred from the drawings, the body 120 has a transverse bottom end wall 121.

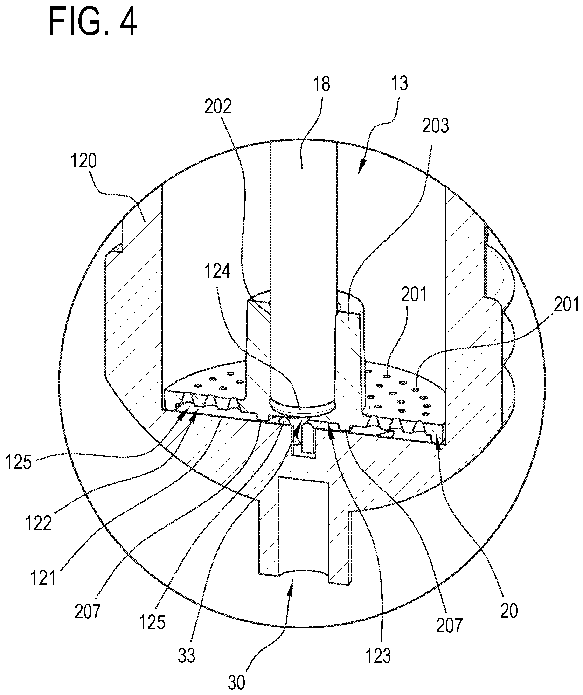

Advantageously, as may be inferred in particular from Figure 4, the disc-shaped element 20 is positioned at the transverse bottom end wall 121 of the body 120.

More specifically, the disc-shaped element 20 defines, with an upper surface 122 of the transverse bottom end wall 121 of the body 120, a space 125, transversely extended, for the passage of liquid from the outlet of the conveying conduit 18 to the disc-shaped element 20.

Advantageously, as may be inferred in particular from Figure 4, the disc-shaped element 20 for filtering the inlet liquid has an annular shoulder 123, which extends inwardly protruding from the inner surface 202 of the sleeve 203 for engaging to the conduit 18, which is engaged by the outer edge 18' of the free end of the conduit 18 for conveying the liquid, preferably with the interposition of a gasket, in particular in the form of a corresponding O-ring 124.

As illustrated, the annular shoulder delimits centrally a hole 33 for passage of the liquid flowing out from the conduit 18.

As mentioned above, there are also second and third means 22 and 24 for filtering the liquid at the outlet from the housing chamber 13.

In this way, it is possible to prevent that the filtering media or fragments thereof escape from the filter and finish in the drink or food product.

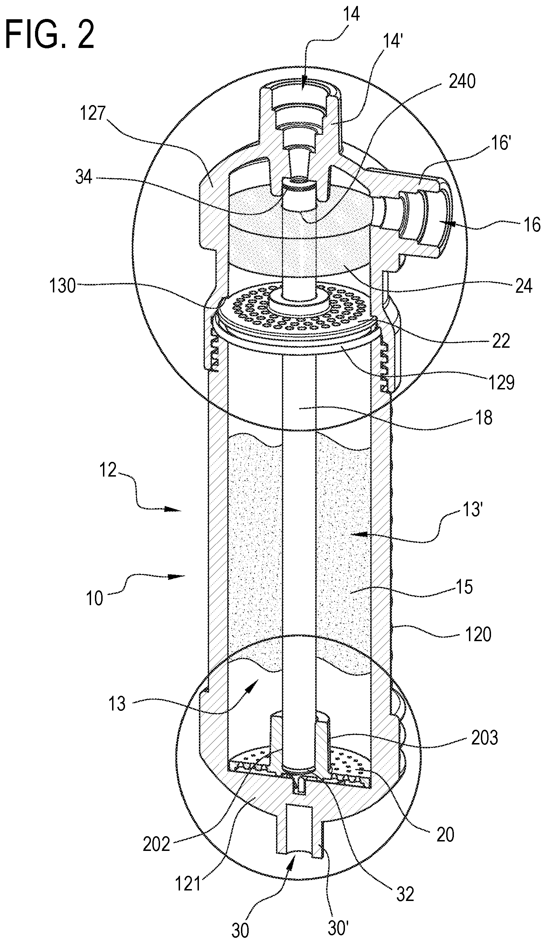

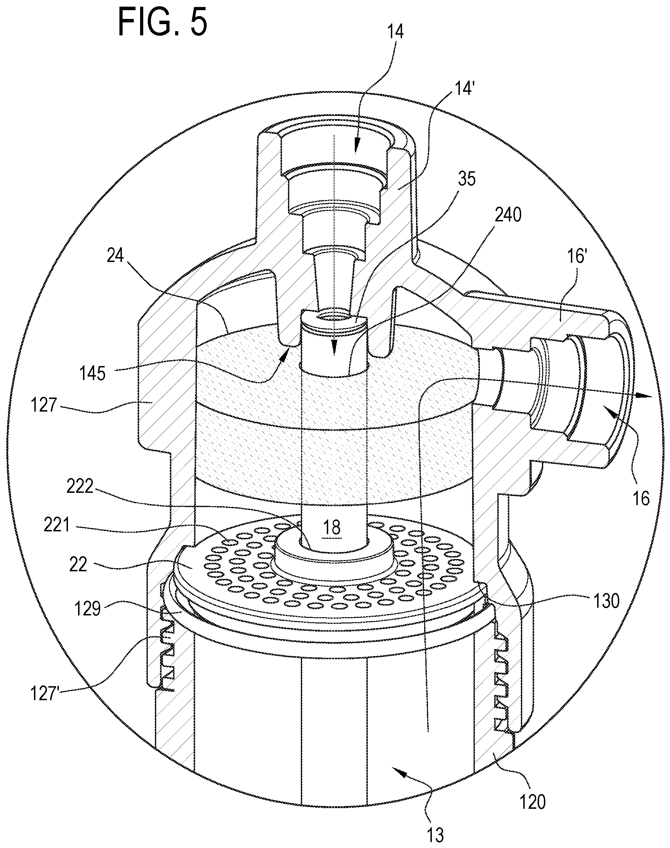

Advantageously, as may be inferred from Figures 2 and 5, the second and third means 22, 24 for filtering liquid flowing out of the housing chamber 13 are in the proximity of the first end in which the means 16 are made for the outflow of the liquid.

Advantageously, as may be inferred from Figures 2 and 5, the second and third means 22, 24 for filtering the liquid are supported by means 18 for conveying the liquid into the housing chamber 13.

In this way, amongst other things, the assembly of the filter is facilitated.

Advantageously, as may be inferred from Figures 2 and 5, the second means for filtering the liquid flowing out from the housing chamber 13 comprise a disc-shaped element 22, preferably made of plastic material, which has a plurality of perpendicular through holes 221 for the liquid.

The disc-shaped element 22 defines primary filtering means for the liquid flowing out from the housing chamber 13.

It should be noted that the disc-shaped element 22 for filtering the liquid flowing out of the housing chamber 13 has an inside surface 222 for circumferentially engaging the outside surface of the conduit 18 for conveying the liquid.

As mentioned above (see also Figure 2), in the filter 10 there are third means 24 for filtering the liquid flowing out from the housing chamber 13 which are able to filter particularly fine solid particles.

In light of this, the third means 24 for filtering the liquid are positioned in contact with the means 16 for the outlet of the liquid from the housing chamber 13.

Advantageously, as may be inferred from Figure 2, the third means for filtering liquid flowing out from the housing chamber 13 comprise a pad-like element 24 made of porous material, preferably spongy material, which is designed to retain solid particles with small dimensions.

Advantageously, as may be inferred from Figure 2, the pad-like element 24 for filtering liquid at the outlet has an inside surface 240 for circumferential engaging on the outside surface of the means 18 for conveying the liquid (that is, the conduit 18).

The third means 24 for filtering particularly fine particles are positioned downstream, along the direction or path of the liquid, relative to the disc-shaped primary filtering element 22 for the liquid flowing out from the housing chamber 13.

The disc-shaped pad-like element 24 is positioned inside the cap 127 in such a way as to make tangential contact with the means 16 for the outlet of the filtered liquid.

In other words, the pad-like element 24 determines the actual outflow of the liquid from the filter 10.

Again as illustrated, the body of the filter is divided into an end cap 127 for closing the main body 120 defining the housing chamber 13.

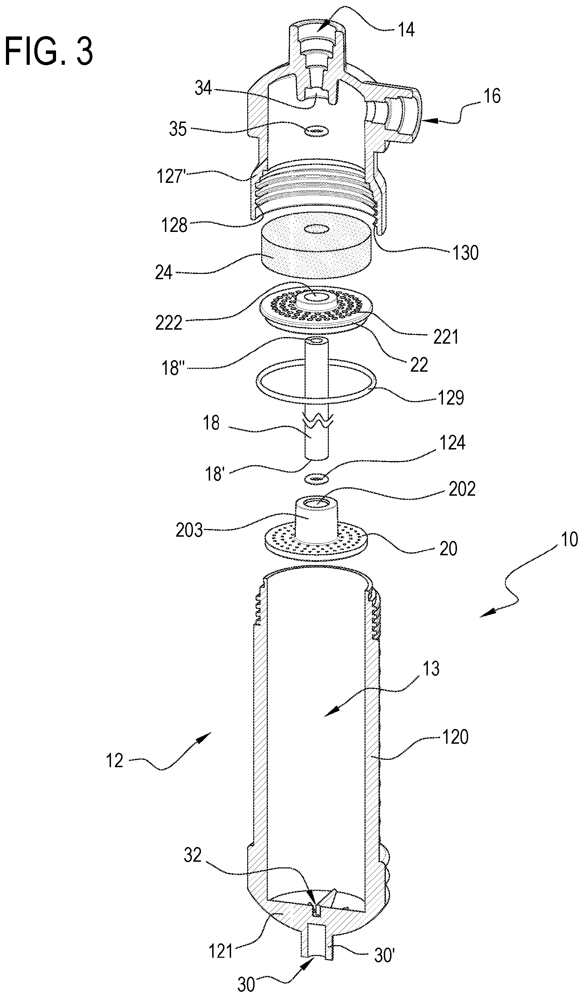

The cap 127 is shaped like a dome and configured to house the second and third means 22, 24 for filtering the liquid at the outlet from the filter 10. Advantageously, as may be inferred in particular from Figures 2 and 3, the end cap 127 is connected, through corresponding thread means 128, to the main body 120 of the filter, preferably with the interposition of seal means, in particular in the form of an O-ring 129.

This structure of the cap 127 allows a quick and easy maintenance and replacement of the filter 10, thanks to the fact that two filtering systems are directly inserted on the same cap and can be replaced, or the entire cap may be replaced in the case of complete wear or difference in position of the connecting conduits.

Advantageously, as may be inferred from Figure 4, the disc-shaped element 20 for filtering liquid flowing into the filtering chamber 13 comprises a peripheral edge 207 protruding perpendicularly and engaging a surface 202 of the transversal wall of the body 120.

The protruding edge 207 delimits peripherally the space 125 for the radial expansion of the liquid at the outlet from the conduit 18.

Advantageously, as may be inferred from Figure 4, the disc-shaped element 20 for filtering liquid flowing into the filtering chamber 13 has two or more perpendicular supporting protrusions 207 on the upper surface 122 of the transverse bottom end wall 121 of the main body 120 of the filter.

The protrusions 207 are made at the central part of the disc-shaped element 20.

The disc-shaped element 22, defining the second filtering means, has a perimeter surface for engaging against the inner surface of the cap 127.

In light of this, the disc-shaped element 22 is held by an annular shoulder 130 of the cap 127.

More specifically, the shoulder 130 is defined at the radial widened section 128 of the cap 127 made to be coupled to the free end of the main body 120.

The disc-shaped element 22 is held by the free edge of the body 120.

The third means 24 for filtering particularly fine particles have a perimeter surface for engaging against the inner surface of the cap 127.

Advantageously, as may be inferred in particular from Figures 2, 3 and 5, there are means 30 for attaching the filter 10 to a machine for dispensing beverages, in particular to the beverage vending machine.

The means 30 for attaching the filter are configured to keep the filter 10 in a vertical position, when in use, that is, when installed in the beverage dispensing machine, in particular in the beverage vending machine.

In this way, errors by the operator when installing the filter are avoided.

In light of this, the means 30 for connecting the filter, are located beneath the filter 10, that is to say, at the second opposite end of the body 120.

Advantageously, as may be inferred from the drawings, the means for attaching the filter 10 comprise a seat 30 for receiving corresponding attachment means (not illustrated) of the beverage vending machine.

Advantageously, as may be inferred from the drawings, the seat 30 for receiving corresponding attaching means of the beverage vending machine is defined by the inside surface of an elongate sleeve 30' which protrudes beneath the body 120 of the filter 10.

Advantageously, as may be inferred from the drawings, the seat 30 for receiving the attaching means of the machine extend axially to the filter 10 from the central zone of the lower transversal portion or wall 121 of the body 120 of the filter.

Advantageously, means are provided configured to keep the filtering media 15 in a floating condition in the liquid to be treated in particular at the middle zone 13' of the chamber 13.

The means for keeping the filtering media 15 in a floating condition, in the liquid to be treated, comprise means for controlling the flow rate of liquid flowing into the chamber 13.

In this way, the media is prevented from resting on the bottom filter, or packing against the upper filter, in both cases not operating in an adequate manner, that is to say, not carrying out the necessary filtration of the liquid.

Advantageously, the control means 32 are configured to limit or dose the flow of liquid flowing into the chamber and are positioned at a respective end of the conduit 18 for conveying the liquid.

The means 32 for controlling or limiting the flow rate of inlet liquid comprise a nozzle with a predetermined section, in particular a predetermined diameter, that is to say, a calibrated nozzle, configured to allow the passage of a flow rate of liquid correlated with the need to keep in a floating condition, in the liquid to be treated, the filtering media 15 at the middle zone 13' of the chamber 13.

Advantageously, the filtering media 15 consist of respective microspheres, preferably ceramic, in particular made of CWSR (Ceramics Water Scale Removing).

The filter therefore comprises a containment body having a first elongate part, or main body 120 and a second part or cap 127 on which are made the inlet means 14 and the outlet means 16 of the liquid to and from the filter.

As mentioned, the cap 127 can be associated with, in particular can be screwed to, by means of threaded surfaces 127' facing each other, the first part 120, with the interposition of sealing means such as an O-ring 129.

Advantageously, as may be inferred from Figures 2, 3 and 5, there are retaining means 34 for the corresponding end of the conduit 18 for conveying the liquid into the housing chamber 13.

In light of this, the retaining means 34 for the corresponding end of the conduit 18 comprise the outlet 14' defining the inlet means 14 of the liquid in the body 120 of the filter.

The outlet 14' protrudes towards the filtering chamber 13 to define, below, a seat 145 for inserting and retaining the corresponding end of the conduit 18. The reference numeral 35 denotes in the drawings a sealing element, in particular an O-ring, which is provided between the upper end 18" of the conveying conduit 18 and the corresponding seat 145 for receiving this end 18".

In practice, as is evident, the technical features described above allow the present invention, individually or in respective combination, to achieve one or more of the following advantageous results:
- a filter with reduced dimensions but with a high number of filtering elements which are capable of purifying the liquid with a high rate of quality and also quickly and easily;
- the external structure of the filter favours the correct positioning of the filter by the operators;
- the reduced dimensions facilitate the use inside a vast range of beverage dispensing or distributing machines;
- thanks to the presence of a double filtering in the proximity of the outlet, the possible escape of the filtering media from the filter is avoided;
- the structural concept enables the media to be always kept in the middle zone without it resting on the bottom filter, or packing against the upper filter, in both cases not operating in an adequate manner, that is to say, not carrying out the necessary filtration of the liquid.

## Claims

1. A filter (10) operating on a liquid, preferably water for making hot or cold beverages; the filter comprising:
- containment means (12) formed by a body (120) defining a chamber (13) for housing filtering media (15) for filtering the liquid, which is made to flow into the chamber (13); the body (120) having a longitudinal axis of extension and defining a first and a second end of the chamber (13);
- a cap (127) which can be associated with the body (120) at the first end of the chamber (13) and is removable from the body (120);
- means (14) for the inlet of the liquid in the containment means (12), the means (14) for the inlet of the liquid extending along the longitudinal axis of extension of the body (120);
- means (16) defining an outlet of the liquid from the containment means (12); the means (16) for the outlet of the liquid extending transversely to the axis of longitudinal extension of the body (120); the means (14) for the inlet of the liquid and the means (16) for the outlet of the liquid from the containment means (12) being both situated at the same first end of the chamber (13),
wherein the means (14) for the inlet and the means (16) defining an outlet are made on the cap (127);
**characterised in that** the filter further comprises:
- first filtering means (20) arranged inside the body (120) and at the second end of the chamber (13), opposite the first end, and configured for filtering the incoming fluid;
- second filtering means (22) and third filtering means (24) located one after the other along the axis of extension of the body (120) and configured for filtering further and in succession, relative to a direction of flow of the liquid, the fluid before its outlet,
wherein the cap (127) is configured to house the second and third filtering means (22, 24);
the second (22) and the third (24) filtering means being stably housed inside the cap (127) at the first end of the chamber (13); said filtering media (15) being positioned between the first (20) and the second filtering means (22) and housed in an intermediate zone (13') of the housing chamber (13) defined by the body (120).

2. The filter according to claim 1, comprising means (18) configured for conveying the liquid to the second end of the chamber (13) for housing the media (15) opposite the first end in which are positioned the means (14) for the inlet of the liquid; the conveying means (18) being positioned inside the filtration chamber (13) that is, inside the body (120); the conveying means consist of a conduit (18), made of flexible material connected at a respective end to the means (14) for the inlet of liquid and which releases the liquid inside the housing chamber (13) at the second end of the chamber.

3. The filter according to claim 2, wherein the first means (20) for filtering the inlet liquid are supported by means (18) for conveying the liquid.

4. The filter according to any one of the preceding claims, wherein the first means for filtering the liquid flowing into the housing chamber (13) comprise a disc-shaped element (20) provided with a plurality of perpendicular through holes (201) for the liquid.

5. The filter according to any one of the preceding claims, wherein the body (120) defining the filtering chamber (13) has a transverse bottom end wall (121).

6. The filter according to any one of claims 2 to 5, wherein the second (22) and third (24) filtering means of the liquid before the outlet from the housing chamber (13) are supported by means (18) for conveying the liquid into the chamber (13).

7. The filter according to any one of the preceding claims, wherein the second filtering means of the liquid at the outlet from the housing chamber (13) comprise a disc-shaped element (22) provided with a plurality of perpendicular through holes (221) for the liquid, in such a way as to define primary filtering means of the liquid at the outlet from the chamber (13).

8. The filter according to any one of the preceding claims, wherein the third filtering means of the liquid before its outlet from the housing chamber (13) comprise a pad-like element (24) made of porous material, which is able to retain solid particles with small dimensions.

9. The filter according to any one of the preceding claims, wherein the third means (24) for filtering the liquid are positioned in contact with the means (16) for the outlet of the liquid from the housing chamber (13).

10. The filter according to any one of the preceding claims, wherein the body (120) defining the housing chamber (13) comprises a main body (120) and the cap (127) for closing the main body (120); the cap (127) being designed to be associated, through corresponding threaded means (128), to the main body (120), with the interposition of corresponding seal means, in particular in the form of an O-ring (129).

11. The filter according to any one of the preceding claims, wherein the second means (22) for filtering the liquid at the outlet from the chamber (13) comprise a perimeter surface for engaging against an inner surface of the cap (127).

12. The filter according to any one of the preceding claims, wherein the third filtering means (24) have a perimeter surface for engaging against an inner surface of the cap (127).

13. The filter according to any one of the preceding claims, comprising means (32) for controlling the flow rate of liquid at the inlet, configured to keep in a floating condition, in the liquid to be treated, the filtering media (15), at a middle zone (13') of the housing chamber (13),
wherein the means (32) for controlling the flow rate of inlet liquid are defined by a nozzle (32) which is able to allow the passage of a flow of liquid suitable to keep in a floating condition, in the liquid to be treated, the filtering media (15) at the middle zone (13') of the housing chamber (13).

14. The filter according to any one of the preceding claims, wherein the filtering media (15) consist of respective microspheres, preferably ceramic, in particular made of CWSR.

## Patentansprüche

1. Filter (10), arbeitend auf einer Flüssigkeit, vorzugsweise Wasser, zur Zubereitung von Heiß- oder Kaltgetränken, wobei der Filter Folgendes umfasst:
- Gehäusemittel (12), die durch einen Körper (120) gebildet sind, der eine Kammer (13) zur Aufnahme von Filtermedien (15) zum Filtern der Flüssigkeit definiert, die veranlasst wird, in die Kammer (13) zu strömen, wobei der Körper (120) eine Längsausdehnungsachse aufweist und ein erstes und ein zweites Ende der Kammer (13) definiert;
- eine Kappe (127), die mit dem Körper (120) an dem ersten Ende der Kammer (13) assoziiert werden kann und von dem Körper (120) entfernbar ist;
- Mittel (14) für den Einlass der Flüssigkeit in die Gehäusemittel (12), wobei sich die Mittel (14) für den Einlass der Flüssigkeit entlang der Längsausdehnungsachse des Körpers (120) erstrecken;
- Mittel (16), die einen Auslass der Flüssigkeit aus den Gehäusemitteln (12) definieren, wobei sich die Mittel (16) für den Auslass der Flüssigkeit quer zur Längsausdehnungsachse des Körpers (120) erstrecken, wobei die Mittel (14) für den Einlass der Flüssigkeit sowie die Mittel (16) für den Auslass der Flüssigkeit aus den Gehäusemitteln (12) beide an demselben ersten Ende der Kammer (13) befindlich sind,
wobei die Mittel (14) für den Einlass und die Mittel (16), die einen Auslass definieren, auf der Kappe (127) ausgebildet sind,
**dadurch gekennzeichnet, dass** der Filter ferner Folgendes umfasst:
- erste Filtermittel (20), die innerhalb des Körpers (120) und an dem zweiten Ende der Kammer (13), dem ersten Ende entgegengesetzt, angeordnet und ausgelegt sind, um das einströmende Fluid zu filtern;
- zweite Filtermittel (22) und dritte Filtermittel (24), die nacheinander entlang der Ausdehnungsachse des Körpers (120) platziert und ausgelegt sind, um das Fluid vor dessen Auslass zusätzlich und in Folge relativ zu einer Strömungsrichtung der Flüssigkeit zu filtern,
wobei die Kappe (127) ausgelegt ist, um die zweiten und dritten Filtermittel (22, 24) aufzunehmen,
wobei die zweiten (22) und dritten (24) Filtermittel stabil innerhalb der Kappe (127) an dem ersten Ende der Kammer (13) aufgenommen sind, wobei die Filtermedien (15) zwischen den ersten (20) und zweiten Filtermitteln (22) positioniert und in einer durch den Körper (120) definierten Zwischenzone (13') der Gehäusekammer (13) aufgenommen sind.

2. Filter nach Anspruch 1, umfassend Mittel (18), die ausgelegt sind, um die Flüssigkeit zum zweiten Ende der Kammer (13) zur Aufnahme der Medien (15), das dem ersten Ende entgegengesetzt ist, in dem die Mittel (14) für den Einlass der Flüssigkeit positioniert sind, zu fördern, wobei die Fördermittel (18) innerhalb der Filterkammer (13), das heißt innerhalb des Körpers (120), positioniert sind, wobei die Fördermittel aus einer Leitung (18) bestehen, die aus flexiblem Material gefertigt und an einem jeweiligen Ende mit den Mitteln (14) für den Flüssigkeitseinlass verbunden ist und die die Flüssigkeit innerhalb der Aufnahmekammer (13) an dem zweiten Ende der Kammer freigibt.

3. Filter nach Anspruch 2, wobei die ersten Mittel (20) zum Filtern der Einlassflüssigkeit von Mitteln (18) zum Fördern der Flüssigkeit gestützt werden.

4. Filter nach einem der vorhergehenden Ansprüche, wobei die ersten Mittel zum Filtern der in die Aufnahmekammer (13) strömenden Flüssigkeit ein scheibenförmiges Element (20) umfassen, das mit einer Vielzahl von senkrechten Durchführungslöchern (201) für die Flüssigkeit versehen ist.

5. Filter nach einem der vorhergehenden Ansprüche, wobei der die Filterkammer (13) definierende Körper (120) eine quer verlaufende Bodenendwand (121) aufweist.

6. Filter nach einem der Ansprüche 2 bis 5, wobei die zweiten (22) und dritten (24) Filtermittel der Flüssigkeit vor dem Auslass aus der Gehäusekammer (13) von Mitteln (18) zum Fördern der Flüssigkeit in die Kammer (13) gestützt werden.

7. Filter nach einem der vorhergehenden Ansprüche, wobei die zweiten Filtermittel der Flüssigkeit am Auslass aus der Gehäusekammer (13) ein scheibenförmiges Element (22) umfassen, das mit einer Vielzahl von senkrechten Durchführungslöchern (221) für die Flüssigkeit versehen sind, sodass sie Primärfiltermittel der Flüssigkeit am Auslass aus der Kammer (13) definieren.

8. Filter nach einem der vorhergehenden Ansprüche, wobei die dritten Filtermittel der Flüssigkeit vor deren Auslass aus der Gehäusekammer (13) ein polsterähnliches Element (24) aus porösem Material umfassen, das in der Lage ist, Feststoffpartikel mit kleiner Größe zurückzuhalten.

9. Filter nach einem der vorhergehenden Ansprüche, wobei die dritten Mittel (24) zum Filtern der Flüssigkeit in Kontakt mit den Mitteln (16) für den Auslass der Flüssigkeit aus der Gehäusekammer (13) positioniert sind.

10. Filtermittel nach einem der vorhergehenden Ansprüche, wobei der die Gehäusekammer (13) definierende Körper (120) einen Hauptkörper (120) und die Kappe (127) zum Verschließen des Hauptkörpers (120) umfasst, wobei die Kappe (127) ausgestaltet ist, um durch entsprechende Gewindemittel (128) mit dem Hauptkörper (120) mit der Einlage von entsprechenden Dichtungsmitteln, insbesondere in der Form eines O-Rings (129), assoziiert zu werden.

11. Filter nach einem der vorhergehenden Ansprüche, wobei die zweiten Mittel (22) zum Filtern der Flüssigkeit am Auslass aus der Kammer (13) eine Umfangsoberfläche zur Anlage an einer Innenoberfläche der Kappe (127) umfassen.

12. Filter nach einem der vorhergehenden Ansprüche, wobei die dritten Filtermittel (24) eine Umfangsoberfläche zur Anlage an einer Innenoberfläche der Kappe (127) aufweisen.

13. Filter nach einem der vorhergehenden Ansprüche, umfassend Mittel (32) zum Regeln der Flüssigkeitsdurchflussmenge am Einlass, die ausgelegt sind, um die Filtermedien (15) in einem schwebenden Zustand in der zu behandelnden Flüssigkeit an einer mittleren Zone (13') der Gehäusekammer (13) zu halten,
wobei die Mittel (32) zum Regeln der Einlassflüssigkeitsdurchflussmenge durch eine Düse (32) definiert sind, die in der Lage ist, das Durchströmen eines Flüssigkeitsstroms zu erlauben, der geeignet ist, um die Filtermedien (15) an der mittleren Zone (13') der Gehäusekammer (13) in einem schwebenden Zustand in der zu behandelnden Flüssigkeit zu halten.

14. Filter nach einem der vorhergehenden Ansprüche, wobei die Filtermedien (15) aus jeweiligen Mikrokugeln, vorzugsweise aus Keramik, insbesondere aus CWSR, bestehen.

## Revendications

1. Filtre (10) fonctionnant sur un liquide, de préférence de l'eau pour faire des boissons chaudes ou froides ; le filtre comprenant :
- des moyens de confinement (12) formés par un corps (120) définissant une chambre (13) pour loger des milieux filtrants (15) pour filtrer le liquide, qui est amené à s'écouler dans la chambre (13) ; le corps (120) ayant un axe longitudinal d'extension et définissant une première et une seconde extrémité de la chambre (13) ;
- un capuchon (127) qui peut être associé au corps (120) à la première extrémité de la chambre (13) et qui est amovible du corps (120) ;
- des moyens (14) pour l'entrée du liquide dans les moyens de confinement (12), les moyens (14) pour l'entrée du liquide s'étendant le long de l'axe longitudinal d'extension du corps (120) ;
- des moyens (16) définissant une sortie du liquide des moyens de confinement (12) ; les moyens (16) pour la sortie du liquide s'étendant transversalement à l'axe d'extension longitudinale du corps (120) ; les moyens (14) pour l'entrée du liquide et les moyens (16) pour la sortie du liquide des moyens de confinement (12) étant tous deux situés à la même première extrémité de la chambre (13),
dans lequel les moyens (14) pour l'entrée et les moyens (16) définissant une sortie sont réalisés sur le capuchon (127) ;
**caractérisé en ce que** le filtre comprend en outre :
- des premiers moyens de filtration (20) agencés à l'intérieur du corps (120) et à la seconde extrémité de la chambre (13), opposée à la première extrémité, et configurés pour filtrer le fluide entrant ;
- des deuxièmes moyens de filtration (22) et des troisièmes moyens de filtration (24) situés l'un après l'autre le long de l'axe d'extension du corps (120) et configurés pour filtrer davantage et en succession par rapport à une direction d'écoulement du liquide, le fluide avant sa sortie,
dans lequel le capuchon (127) est configuré pour loger les deuxièmes et troisièmes moyens de filtration (22, 24) ;
les deuxièmes (22) et troisièmes (24) moyens de filtration étant logés de manière stable à l'intérieur du capuchon (127) à la première extrémité de la chambre (13) ; lesdits milieux filtrants (15) étant positionnés entre les premiers (20) et deuxièmes (22) moyens de filtration et logés dans une zone intermédiaire (13') de la chambre de logement (13) définie par le corps (120).

2. Filtre selon la revendication 1, comprenant des moyens (18) configurés pour transporter le liquide vers la seconde extrémité de la chambre (13) pour loger les milieux (15) opposé à la première extrémité où sont positionnés les moyens (14) pour l'entrée du liquide ; les moyens de transport (18) étant positionnés à l'intérieur de la chambre de filtration (13), soit à l'intérieur du corps (120) ; les moyens de transport consistent en un conduit (18), fait d'un matériau flexible relié à une extrémité respective aux moyens (14) pour l'entrée du liquide et qui libère le liquide à l'intérieur de la chambre de logement (13) à la seconde extrémité de la chambre.

3. Filtre selon la revendication 2, dans lequel les premiers moyens (20) pour filtrer le liquide à l'entrée sont supportés par des moyens (18) pour transporter le liquide.

4. Filtre selon l'une quelconque des revendications précédentes, dans lequel les premiers moyens pour filtrer le liquide s'écoulant dans la chambre de logement (13) comprennent un élément en forme de disque (20) pourvu d'une pluralité de trous traversants perpendiculaires (201) pour le liquide.

5. Filtre selon l'une quelconque des revendications précédentes, dans lequel le corps (120) définissant la chambre de filtration (13) a une paroi d'extrémité inférieure transversale (121).

6. Filtre selon l'une quelconque des revendications 2 à 5, dans lequel les deuxièmes (22) et troisièmes (24) moyens de filtration du liquide avant la sortie de la chambre de logement (13) sont supportés par des moyens (18) pour transporter le liquide dans la chambre (13).

7. Filtre selon l'une quelconque des revendications précédentes, dans lequel les deuxièmes moyens de filtration du liquide à la sortie de la chambre de logement (13) comprennent un élément en forme de disque (22) pourvu d'une pluralité de trous traversants perpendiculaires (221) pour le liquide, de manière à définir des moyens de filtration primaires du liquide à la sortie de la chambre (13).

8. Filtre selon l'une quelconque des revendications précédentes, dans lequel les troisièmes moyens de filtration du liquide avant sa sortie de la chambre de logement (13) comprennent un élément en forme de tampon (24) fait d'un matériau poreux, qui est capable de retenir des particules solides de petites dimensions.

9. Filtre selon l'une quelconque des revendications précédentes, dans lequel les troisièmes moyens (24) pour filtrer le liquide sont positionnés en contact avec les moyens (16) pour la sortie du liquide de la chambre de logement (13).

10. Filtre selon l'une quelconque des revendications précédentes, dans lequel le corps (120) définissant la chambre de logement (13) comprend un corps principal (120) et le capuchon (127) pour fermer le corps principal (120) ; le capuchon (127) étant conçu pour être associé, par l'intermédiaire de moyens filetés correspondants (128), au corps principal (120), avec l'interposition de moyens d'étanchéité correspondants, en particulier sous la forme d'un joint torique (129).

11. Filtre selon l'une quelconque des revendications précédentes, dans lequel les deuxièmes moyens (22) pour filtrer le liquide à la sortie de la chambre (13) comprennent une surface périphérique pour s'engager contre une surface interne du capuchon (127).

12. Filtre selon l'une quelconque des revendications précédentes, dans lequel les troisièmes moyens de filtration (24) ont une surface périphérique pour s'engager contre une surface intérieure du capuchon (127).

13. Filtre selon l'une quelconque des revendications précédentes, comprenant des moyens (32) pour contrôler le débit de liquide à l'entrée, configurés pour maintenir dans un état flottant, dans le liquide à traiter, les milieux filtrants (15), au niveau d'une zone médiane (13') de la chambre de logement (13),
dans lequel les moyens (32) pour contrôler le débit du liquide à l'entrée sont définis par une buse (32) qui est capable de permettre le passage d'un flux de liquide approprié pour maintenir dans un état flottant, dans le liquide à traiter, les milieux filtrants (15) au niveau de la zone médiane (13') de la chambre de logement (13).

14. Filtre selon l'une quelconque des revendications précédentes, dans lequel les milieux filtrants (15) sont constitués de microsphères respectives, de préférence en céramique, en particulier en CWSR.
